# EUROPÄISCHE PATENTANMELDUNG

(11) **EP 0 905 845 A2**
(43) Veröffentlichungstag der Anmeldung: **31.03.1999**
(21) Anmeldenummer: 98250343.5
(22) Anmeldetag: 25.09.1998
(51) Int. Cl.: H02H 1/06, H02H 3/04

(54) **Überstromauslöser mit energieabhängiger Steuerung der Anzeigeeinheit**

(30) Priorität: 30.09.1997 DE 19744207
(71) Anmelder: SIEMENS AKTIENGESELLSCHAFT, 80333 München (DE)
(72) Erfinder: Hochgraef, Holger, 16845 Ganzer (DE); Baumgärtl, Ulrich, 13599 Berlin (DE); Röhl, Wolfgang, 13503 Berlin (DE)

(57) **Zusammenfassung**

Ein elektronischer Überstromauslöser (9) mit einer Anzeigeeinheit (7) wird aus einem Stromwandler (3) und einem durch diesen zu ladenden Kondensator (10) gespeist. Eine Steuereinrichtung mit einer Frequenz- und/oder Pulsweiten-Modulatorfunktion sorgt für ein taktweises Einschalten der Anzeigeeinheit (7). Hierzu ist zwischen die Anzeigeeinheit (7) und den Kondensator (10) ein steuerbarer Schalter (7) geschaltet, der durch ein von der Steuereinrichtung abgegebenes Steuersignal (81) betätigbar ist.

## Beschreibung

Die vorliegende Erfindung bezieht sich auf eine Stromversorgung für eine Anzeigeeinheit eines elektronischen überstromauslösers oder dergleichen. Überstromauslöser mit Anzeigeeinheit sind z.B. bekannt aus W091/03826 = US-A-5089928 und aus EP-B-0432054. Für die Anzeigeeinheit dieser bekannten Überstromausläser ist jeweils eine Batterie als sekundäre Stromquelle vorgesehen, und zwar für den Zeitraum nach erfolgter Netzabschaltung, in dem keine hinreichende Stromversorgung aus dem Stromwandler des Auslösers möglich ist. Es ist dort beschrieben, in welcher Weise das Umschalten auf den Batteriebetrieb erfolgt.

Jeglicher Einsatz einer Batterie zur Stromversorgung bedingteine spezielle Wartung derselben, um deren stete Bereitschaft zu gewährleisten.

Aufgabe der vorliegenden Erfindung ist es, auch nur sehr beschränkt zur Verfügung stehenden Wandlerstrom optimal für dieEnergieversorgung des eigentlichen Auslösers ausnutzen zu können und für die Anz&igeelemente nur soviel Strom in Anspruch zu nehmen, daß sich einerseits nur möglichst kleine Einschränkung des Ablesekomforts ergibt, andererseits jedoch die Stromversorgung für die Funktionselemente des Überstromauslösers, d.h. seine Schutzfunktion auch bei kleinsten zur Verfügung stehenden Wandlerströmen noch gewährleistet ist. Mit der Erfindung soll vermieden sein, die Anzeigeelemente bei nur noch geringer Stromversorgung durch den Stromwandler sogar total abschalten zu müssen, um die Schutzfunktion aufrecht zuerhalten.

Diese Aufgabe wird mit den Merkmalen des Anspruches 1 gelöst und weitere Ausgestaltungen der Erfindung gehen aus den Unteransprüchen hervor.

Erfindungsgemäß ist vorgesehen, die Zuschaltung der Anzeigeelemente je nach für diese zur Verfügung stehender Stromversorgung zeitlich gesteuert vorzunehmen. Es ist hierzu erfin dungsgemäß eine Einrichtung zur Frequenz- bzw. Pulsweiten-Modulation vorgesehen, mit deren Hilfe bei nur geringem Überschuß zur Verfügung stehender Stromversorgung die Anzeige mit kleiner Einschaltdauer bei großen Pausen zwischen aufeinanderfolgenden Einschaltvorgängen erfolgt.

In dem Überstromauslöser mit Anzeigeeinheit ist vorgesehen, daß für die Aktivierung der Anzeige Energie einem dafür vorgesehenen Kondensator entnommen wird, der von dem Stromwandler des Überstromauslösers gespeist wird. Diese Speisung erfolgt hier mit überschüssiger elektrischer Leistung des Wandlers. Bei genügend hoher zur Verfügung stehender Versorgungsleistung kann die Anzeige dauernd eingeschaltet bleiben. Ist jedoch die zur Verfügung stehende elektrische Leistung begrenzt, so wird mittels der Modulatoreinrichtung die Anzeige durch der hierfür zur Verfügung stehenden elektrischen Energie entsprechendem Pulsbetrieb nur noch zeitweise eingeschaltet. Damit auch bei nur noch geringem Überschuß an Versorgungsstrom ein sofortiges Ablesen der Anzeige möglich ist,kann ergänzend eine Taste vorgesehen sein, mit der eine insbesondere kurzzeitige Aktivierung der Anzeige ausgelöst werden kann, ohne die nächste taktweise erfolgende Anzeige abwarten zu müssen.

Weitere Erläuterungen der Erfindung gehen aus der Beschreibung zur beigefügten Figur hervor.

Mit 1 ist ein stromdurchflossener Leiter bezeichnet, dessen Stromfluß im Falle des Auftretens eines Überstromes mittels des Schalters 2 zu unterbrechen ist. Mit 3 ist der Stromwandler bezeichnet, mit dessen Hilfe einerseits die Stromstärke im Leiter 1 erfaßt wird und andererseits eine Stromversorgung der anschließend noch zu beschreibenden Teile erfolgt.

Ein Netzteil ist mit 4 bezeichnet. Dieses enthält wie üblich einen Ladekondensator 10.

Der eigentliche bekannte Überstromauslöser ist mit 9 bezeichnet und enthält generell einen Prozessor 91. Die Verbindung 5 dient der Energiezufuhr und Ansteuerung des schon erwähnten Schalters 2.

Mit 6 ist ein Schalter bezeichnet, mittels dessen die Stromzufuhr zur Anzeigeeinheit 7 taktweise zugeschaltet/ein- und ausgeschaltet werden kann. Soweit damit auch eine Ansteuereinheit, der Daten zugeführt werden, spannungslos geschaltet wird, ist im allgemeinen auch deren Dateneingang zu sperren.

Der Frequenz- und/oder Pulsweitenmodulator 8 erzeugt ein von der zur Verfügung stehenden Energie abhängiges Steuersignal, abgeleitet z.B. aus der am Ausgang des Netzteils auftretenden aktuellen elektrischen Spannung. Dieses Steuersignal dient dazu, den Schalter 6 über die Leitung 81 taktweise zu schalten. Für diese Aufgabe, den Takt zu bestimmen, kann wahlweise auch der Mikroprozessor 91 des Überstromauslösers 9 vorgesehen und eingesetzt werden. Dafür ist dieser mittels einer Steuerleitung 191 mit dem Puisweitenmodulator 8 zu verbinden.

Es kann auch die Funktion des Pulsweitenmodulators in dem Mikroprozessor 91 integriert enthalten sein. In diesem Falle ist dadurch der Pulsweitenmodulator 8 ersetzt und die Steuerleitung 191 (anstelle der Leitung 81) mit dem Schalter 6 zu verbinden.

Der jeweils vorgesehene Mikroprozessor 91 ist außerdem mit der Anzeige 7 verbunden, um dieser die anzuzeigenden Daten zuzuführen.

Es ist außerdem eine wie schon erwähnte Taste 11 zum Einschalten einer (handgesteuerten) sofortigen Anzeige vorgesehen, die mit der Vorrichtung in wie dargestellter Weise verbunden sein kann.

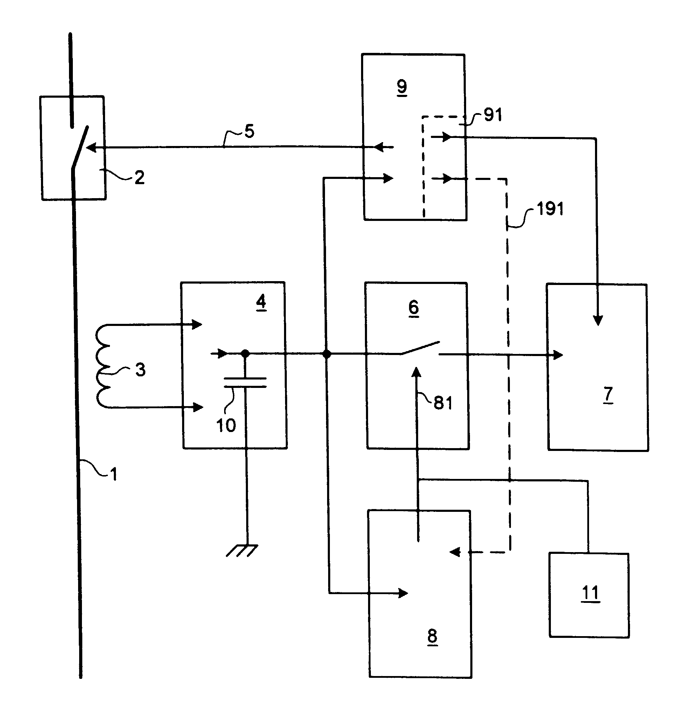

## Patentansprüche

1. Aus einem Stromwandler (3) gespeister Überstromauslöser (9) mit elektrischer Anzeigeeinheit (7) sowie mit einer Einrichtung,
mit einer Frequenz- und/oder pulsweiten-Modulatorfunktion (8) für ein Steuersignal für taktweises Einschalten der Anzeigeeinheit (7),
mit einer Steuereinrichtung für von der zur Verfügung stehenden überschüssigen Energie abhängige Steuerung der Erzeugung des Steuersignals der Modulatorfunktion (8) mit einem aus dem Stromwandler aufladbaren Kondensator (10) als Stromversorgung der Anzeigeeinheit (7) wobei die elektrische Verbindung zwischen dem Kondensator (10) und der Anzeigeeinheit (7) einen Schalter (6) enthält, der mittels dieses Steuersignals (81) zu steuern ist.

2. Überstromauslöser (4) nach Anspruch 1, mit einem Mikroprozessor (91), der integral als Steuereinrichtung auch das Modulator (8)-Steuersignal bestimmt.

3. Uberstromauslöser (4) nach Anspruch 1 oder 2, mit zusätzlicher Taste (11) für handgesteuerte Aktivierung der Anzeige der Anzeigeeinheit (7).
